# EUROPEAN PATENT SPECIFICATION

(11) **EP 0 771 710 B1**
(45) Date of publication and mention of the grant of the patent: **28.07.1999**
(21) Application number: 96850178.3
(22) Date of filing: 24.10.1996
(51) Int. Cl.: B61D 3/10, B60D 5/00, B61G 5/02, B62D 47/02

(54) **Coach coupling assembly**
Kupplungseinheit für Reisezugwagen
Ensemble d'accouplement pour voiture

(30) Priority: 30.10.1995 SE 9503808
(43) Date of publication of application: 07.05.1997
(73) Proprietor: Aktiebolaget SKF, S-415 50 Göteborg (SE)
(72) Inventor: Bildtsén, Christian, 443 35 Lerum (SE)
(74) Representative: Westman, P. Börje I.

(56) References cited:
- WO-A-94/20766
- FR-A- 2 695 612
- US-A- 3 687 084

## Description

The present invention refers to a coach coupling assembly for coupling together two coaches of a railbound multi-unit set of coaches in accordance with the preamble of the accompanying claim 1.

Coaches of rolling stock, such as tram trains, are of two main types, one type being equipped with double wheel units, one at each end of the coach, whereas the other, trailing coach, has only one wheel unit located at that end of the coach, which shall not be connected to another coach.

At the end or ends, to be coupled together with a trailing coach, the coach has a fixed coupling device formed as a projecting beam with a vertically arranged socket intended to receive from above, a depending shaft journal arranged at the outer end of an arm projecting in longitudinal direction from the trailing coach end having no wheel unit.

The depending shaft journal must be journalled in the socket to be able to make angular pivoting movements in the socket when the tram train or the like travels in curves etcetera. At a rigidly supported shaft journal, impacts and vibrations occuring during travel, e.g. at braking, could cause damage to the rolling bodies and race tracks of the rolling bearing used for journalling the shaft journal. For avoiding such damages it is essential to eliminate transfer of such impacts, vibrations etcetera, and this can preferably be done by providing the coupling with elastic damping means arranged to absorbe such impacts.

Furthermore it is also essential to give the coupling a possibility of a certain relative movement about an imagined horizontal axis, for allowing travel over level differences without subjecting the bearing or the coupling means to stresses. Such adjustability can also, to a certain extent, be obtained with elastic damping means.

EP-A1-0 612 646 refers to a coach coupling as described above, wherein the depending shaft journal is supported in a deep groove ball bearing. The impact damping means in this case is designed as an elastomeric linkage having a stiff inner body with a vertical centre bore for receiving the depending shaft journal, and a stiff outer body having a seat surface for the inner race ring of the ball bearing. The two stiff linkage bodies are spaced apart by a "hemi-spherical" elastomeric shell-formed body, and the two stiff linkage bodies have surfaces facing the shell-formed elastomeric body shaped to match the curvature of the "hemi-spherical" body. Manufacturing of such a linkage body is expensive and the design is partly open, whereby the coupling must be protected from dirt and moisture by means of an external sealing bellows. See also WO 94/20766.

The purpose of the present invention is to provide a coach coupling in accordance with the preamble of the accompanying claim 1, which is designed in such a manner that it is compact in size and sealed off, and construed from inexpensive standard machine elements, and this has been achieved by giving the coupling the features defined in the characterizing part of the appended claim 1.

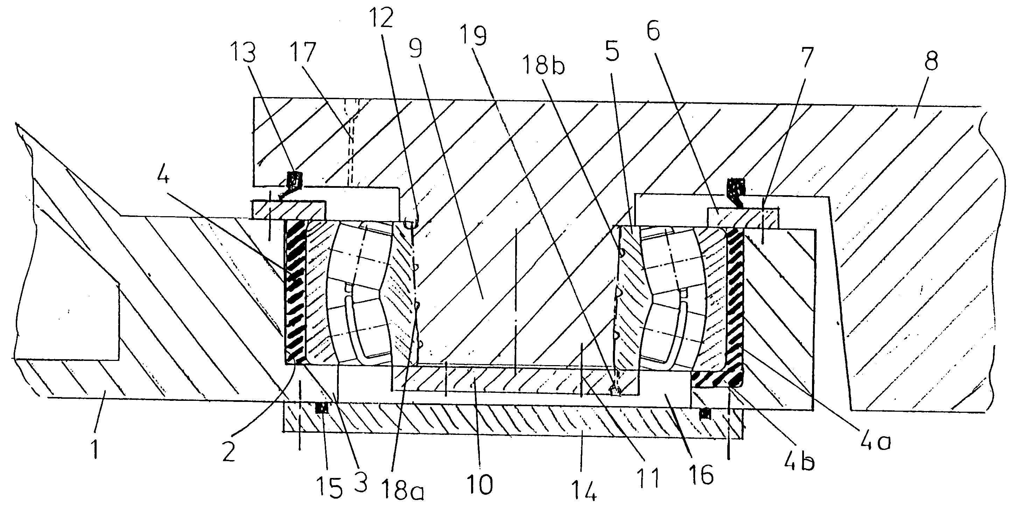

Hereinafter the invention will be further described with reference to an embodiment of the coach coupling according to the present invention, shown in the accompanying drawing, and showing in a cross-section parts of the coupling arms and the articulated coupling itself.

The drawing shows a projecting first arm 1, which is fixedly connected to a not shown first coach. Near the free end of the first arm 1, there is provided a circular, vertical through hole 2, with a concentric bottom flange 3 of smaller diameter than the upper part of the hole 2. In the bore 2 is provided a sleeve-formed elastic lining 4. In the left hand half of the drawing this lining 4 is shown as a tubular bushing provided between the circumferential inner surface of the thorugh-bore 2 and the outer circumference of the bearing, but as can be seen in the right hand half this lining 4a, can have a inwardly directed bottom collar 4b, which in mounted position is situated between the flange 3 and the side face of the bearing.

A double-row spherical roller bearing 5 is mounted with the circumference of its outer race ring fitting into this elastic lining 4, thus that the outer race ring of the bearing 5 in mounted position rests on the flange 3 of the first arm 1. The outer race ring of the bearing 5 is further secured from being removed from its mounted position in the elastic lining 4 in a direction upwards as shown in the drawing, by means of a ring 6 positioned concentric with the hole 2 in the first arm 1 and being removably fitted to this by means of screw joints 7 or the like, said ring having a center opening somewhat smaller than the outer diameter of the bearing 5, whereby the inner edge of ring 6 in mounted position prevents the bearing from leaving its mounted position within the lining 4. The double-row spherical bearing has a taper bore with its smaller diameter positioned at the bottom side of the bore 2 in the first arm 1.

A second projecting arm 8, which is fixedly connected to another, preferably trailing, and not shown coach, has near its outer end a depending, tapering shaft journal 9 having a vertical axis. This tapering shaft journal 9 has a dimension being complementary to the dimension of the inner taper of the bearing 5, and when being mounted in the taper bore of the bearing 5 this tapering shaft journal 9 can be driven up to a zero clearance or a to a certain pre-tension. After the bearing inner race ring has been driven up to desired internal clearance, it is affixed to the shaft journal 9 by means of a circular locking disc 10, which is fitted to the end of the shaft journal through the bottom opening of the hole 2, e.g. with bolts 11, and which disc 10 extends radially outside the shaft journal end.

The tapering shaft journal 9 is further provided with a circumferential shoulder 12 at its bigger end, said shoulder 12 providing an abutment for the bearing inner race ring from moving in one direction, whereas said locking disc 10 prevents the inner race ring from moving in the opposite direction. The size of the internal clearance being adjustable by means of not shown shims or the like.
The second arm 8 is further provided with an annular sealing device 13 positioned concentric to the center axis of the tapering shaft journal 9 and intended to form a sliding seal against the facing surface of the first arm 1, or, as shown in the drawing, against the bearing securing ring 6 attached to the first arm 1.

The bottom opening of the bore 2 finally is covered by a cover disc 14, removably affixed thereto, e.g. by screw joints and having provided between itself and the goods of the first arm 1 an annular sealing device, such as an O-ring seal 15 provided in a groove in the cover disc or in the bottom surface of the first arm 1.

By provision of the seal 13 and the cover disc 14 with its seal 15, it is provided a sealed-off chamber 16 in which the bearing and the cooperating surfaces of the coach coupling are all enclosed. This sealingly closed chamber 16 protects the bearing and the coupling details from external dirt and moisture and it can preferably be completely filled with a liquid or semi-liquid lubricant via a lubricant nipple 17.

The envelope surface of the shaft journal 9 and/or the bore of the inner race ring of the bearing 5 can be equipped with a helical groove 18a and 18b, respectively, (illustrated at the left hand side and the right hand side of the drawing), which via a duct 19 can be connected to a source of pressurized oil for facilitating dismantling of the coupling for repair and maintenance purposes.

In this manner it has been provided a reliable, simple and cost efficient coach coupling of the type mentioned initially which is construed mainly from standard machine components and where the sleeve-formed elastical lining 4 takes up and absorbs radial forces, whereas the spherical roller bearing 5 provides a smooth operation at angular movements when the centre axes of the bore 2 in the first arm 1 and the shaft journal 9 on the second arm 8 coincide, but also, due to the self-aligning properties of the spherical roller bearing, when misalignments occur between these two axes.

The invention is not limited to the embodiments shown in the drawings and described in connection thereto but modifications and variations are possible within the scope of the appended claims. Thus, although the bearing has been shown and described as a double-row spherical roller bearing, it could, without departing from the scope of the invention, be substitued by any other rolling bearing having self-aligning properties similar or nearly similar to a spherical roller bearing. The shaft journal of the second arm and the bore of the inner race ring of the bearing have been shown having complementary tapering shapes, but it is also possible to use a cylindrical shaft journal which is mounted in a cylindric bore, even if the tapering embodiment will facilitate application of a desired internal clearance in the bearing and the introduction of the smaller shaft journal end into the bore in the inner bearing race ring.

## Claims

1. A coach coupling assembly for coupling together two coaches of a railbound multi-unit set of coaches, having a first coupling arm (1) fixedly connected to a first one of said coaches, and a second coupling arm (8) fixedly connected to a second one of said coaches, the first arm (1) having a substantially vertically arranged through-bore (2), housing the outer race ring of a rolling bearing (5), in the bore of the inner race ring of which, is received a depending shaft journal (9) fixedly fitted to said second coupling arm (8), and means provided to take up and damp radial forces acting upon the coupling and to compensate for misalignment between the axes of the said through-bore (2) and said shaft journal (9),
**characterized therein,**
that the through-bore (2) of the first arm (1) is provided with an elastic lining (4,4a) of a resilient material, and that the bearing used is an angularly self-aligning rolling bearing (5) permitting a certain degree of misalignment between the axes of the through-bore (2) and the shaft journal (9), and being fitted inside said lining (4,4a), which is thereby adapted to take up and dampen radial forces acting upon the coupling.

2. A coach coupling as claimed in claim 1,
**characterized therein,**
that the lining is a tubular sleeve (4) of elastically resilient material.

3. A coach coupling as claimed in claim 1,
**characterized therein,**
that the lining is a sleeve (4a) of elastically resilient material, provided with a radially inwardly extending collar (4b) at the end to be inserted into the through-bore (2).

4. A coach coupling as claimed in anyone of the preceding claims,
**characterized therein,**
that the rolling bearing is a double-row spherical roller bearing (5).

5. A coach coupling according to anyone of the preceding claims,
**characterized therein,**
that the bearing (5) and the coupling components (2, 4, 9) are enclosed in a sealed-off chamber (16).

6. A coach coupling as claimed in claim 5,
**characterized therein,**
that the sealed-off chamber (16) is provided with a lubricant nipple (17) for introduction of a liquid or semi-liquid lubricant therein.

7. A coach coupling as claimed in anyone of the preceding claims,
**characterized therein,**
that the shaft journal (9) of the second arm (2) and the bore of the inner race ring of the bearing (5) have complementary tapering shapes.

8. A coach coupling as claimed in anyone of the preceding claims,
**characterized therein,**
that the race rings of the bearing (5) are secured to the first and second arms (1, 2) resp. by means of fixed abutment surfaces (3 and 5 resp.) and removably fixed locking elements (6 and 10 resp.).

9. A coach coupling as claimed in anyone of the preceding claims,
**characterized therein,**
that the bottom side of the through-bore (2) in the first coupling arm (1) is sealingly covered by a separate removable cover member (14).

10. A coach coupling as claimed in anyone of the preceding claims,
**characterized therein,**
that the envelope surface of the shaft journal (9) and/or the bore of the inner race ring of the bearing (5) is/are equipped with a helical groove (18a, 18b), which via a duct (19) is connectable to a source of pressurized fluid for dismantling purposes.

## Patentansprüche

1. Kupplungsvorrichtung für Wagen zum Zusammenkuppeln von zwei Wagen einer schienengebundenen Mehrfachgarnitur von Wagen mit einem ersten Kupplungsarm (1), der fest mit einem der Wagen verbunden ist, und einem Zweiten Kupplungsarm (8), der fest mit dem zweiten Wagen verbunden ist, wobei der erste Arm (1) eine im wesentlichen vertikal angeordnete Durchgangsbohrung (2), die den äußeren Laufring eines Wälzlagers (5) aufnimmt, in dessen Bohrung seines inneren Laufrings ein abhängiger Wellenzapfen (9) aufgenommen ist, der fest an dem zweiten Kupplungsarm (8) angebracht ist, und Mittel besitzt, die zum Aufnehmen und Dämpfen auf die Kupplung wirkender Radialkräfte und zum Ausgleichen einer Fehlausrichtung zwischen den Achsen der Durchgangsbohrung und des Wellenzapfens (9) vorgesehen sind, **dadurch gekennzeichnet**, daß die Durchgangsbohrung (2) des ersten Armes mit einer nachgiebigen Auskleidung (4, 4a) aus einem elastischen Material versehen ist und daß das verwendete Lager ein im Winkel selbstausrichtendes Wälzlager (5) ist, das einen bestimmten Grad von Fehlausrichtung zwischen den Achsen der Durchgangsbohrung (2) und des Wellenzapfens (9) zuläßt und in die Auskleidung (4, 4a) eingefügt ist, wodurch diese zum Aufnehmen und Dämpfen auf die Kupplung wirkender Radialkräfte geeignet ist.

2. Kupplungsvorrichtung nach Anspruch 1, **dadurch gekennzeichnet**, daß die Auskleidung eine rohrförmige Hülse (4) aus elastisch nachgiebigem Material ist.

3. Kupplungsvorrichtung nach Anspruch 1, **dadurch gekennzeichnet**, daß die Auskleidung eine Hülse (4a) aus elastisch nachgiebigem Material ist, die mit einem sich radial nach innen erstreckenden Kragen (4b) an dem in die Durchgangsbohrung (2) einzufügenden Ende versehen ist.

4. Kupplungsvorrichtung nach einem der vorhergehenden Ansprüche, **dadurch gekennzeichnet**, daß das Wälzlager ein zweireihiges Pendelrollenlager (5) ist.

5. Kupplungsvorrichtung nach einem der vorhergehenden Ansprüche, **dadurch gekennzeichnet**, daß das Lager (5) und die Bauteile (2, 4, 9) der Kupplung in einer abgedichteten Kammer (16) eingeschlossen sind.

6. Kupplungsvorrichtung nach Anspruch 5, **dadurch gekennzeichnet**, daß die abgedichtete Kammer (16) mit einem Schmiernippel (17) zum Einleiten eines flüssigen oder halbflüssigen Schmiermittels versehen ist.

7. Kupplungsvorrichtung nach einem der vorhergehenden Ansprüche, **dadurch gekennzeichnet**, daß der Wellenzapfen (9) des zweiten Armes (2) und die Bohrung des inneren Laufrings des Lagers (5) sich ergänzende Kegelformen haben.

8. Kupplungsvorrichtung nach einem der vorhergehenden Ansprüche, **dadurch gekennzeichnet**, daß die Laufringe des Lagers (5) an dem ersten bzw. zweiten Arm (1 bzw. 2) mit Hilfe feststehender Anlageflächen (3 bzw. 5) und entfernbar befestigter Verriegelungselemente (6 bzw. 10) angebracht sind.

9. Kupplungsvorrichtung nach einem der vorhergehenden Ansprüche, **dadurch gekennzeichnet**, daß die Unterseite der Durchgangsbohrung (2) in dem ersten Kupplungsarm (1) durch ein getrenntes, entfernbares Abdeckelement (14) in abdichtender Weise abgedeckt ist.

10. Kupplungsvorrichtung nach einem der vorhergehenden Ansprüche, **dadurch gekennzeichnet**, daß die Hüllfläche des Wellenzapfens (9) und/oder die Bohrung des inneren Laufrings des Lagers (5) mit einer schraubenförmigen Nut (18a, 18b) versehen ist/sind, die zu Demontagezwecken über einen Kanal (19) an eine Quelle unter Druck stehenden Fluids anschließbar ist.

## Revendications

1. Ensemble d'attelage pour véhicules ferroviaires pour atteler l'un à l'autre deux véhicules ferroviaires d'une rame ferroviaire de véhicules ferroviaires à unités multiples, comprenant un premier bras d'attelage (1) relié de façon fixe à un premier desdits véhicules ferroviaires, et un deuxième bras d'attelage (8) relié de façon fixe à un deuxième desdits véhicules ferroviaires, le premier bras (1) comportant un alésage traversant disposé sensiblement verticalement (2), renfermant la bague de roulement extérieure d'un palier à roulement (5), dans l'alésage de la bague de roulement intérieure duquel est reçu un bras de pivotement pendant (9) raccordé de façon fixe audit deuxième bras d'attelage (8), et des moyens disposés pour absorber et amortir les forces radiales agissant sur l'attelage et pour compenser le défaut d'alignement entre les axes dudit alésage traversant (2) et dudit bras de pivotement (9),
caractérisé en ce que l'alésage traversant (2) du premier bras (1) est muni d'une doublure élastique (4, 4a) en un matériau élastique, et en ce que le palier utilisé est un palier à roulement à auto-alignement angulaire (5) permettant un certain degré de défaut d'alignement entre les axes de l'alésage traversant (2) et de l'arbre de pivotement (9), et est fixé à l'intérieur de ladite doublure (4, 4a), qui est par conséquent adaptée pour absorber et amortir les forces radiales agissant sur l'attelage.

2. Attelage pour véhicules ferroviaires selon la revendication 1, caractérisé en ce que la doublure est un manchon tubulaire (4) en matériau élastiquement flexible.

3. Attelage pour véhicules ferroviaires selon la revendication 1, caractérisé en ce que la doublure est un manchon (4a) en matériau élastiquement flexible, comportant un collier s'étendant radialement vers l'intérieur (4b) à l'extrémité devant être insérée dans l'alésage traversant (2).

4. Attelage pour véhicules ferroviaires selon l'une quelconque des revendications précédentes, caractérisé en ce que le palier à roulement est un roulement à billes sphérique à double rangée (5).

5. Attelage pour véhicules ferroviaires selon l'une quelconque des revendications précédentes, caractérisé en ce que le palier (5) et les composants d'attelage (2, 4, 9) sont renfermés dans une chambre étanchement scellée (16).

6. Attelage pour véhicules ferroviaires selon la revendication 5, caractérisé en ce que la chambre étanchement scellée (16) comporte un raccord de lubrifiant (17) pour l'introduction d'un lubrifiant liquide ou semi-liquide à l'intérieur de celle-ci.

7. Attelage pour véhicules ferroviaires selon l'une quelconque des revendications précédentes, caractérisé en ce que l'arbre de pivotement (9) du deuxième bras (2) et l'alésage de la bague de roulement intérieure du palier (5) ont des formes effilées complémentaires.

8. Attelage pour véhicules ferroviaires selon l'une quelconque des revendications précédentes, caractérisé en ces que les bagues de roulement du palier (5) sont fixées aux premier et deuxième bras (1, 2), respectivement, au moyen de surfaces de butée fixes (3 et 5, respectivement) et d'éléments de verrouillage fixés de façon amovible (6 et 10, respectivement).

9. Attelage pour véhicules ferroviaires selon l'une quelconque des revendications précédentes, caractérisé en ce que la face inférieure de l'alésage traversant (2) dans le premier bras d'attelage (1) est étanchement recouverte par un élément de couverture amovible séparé (14).

10. Attelage pour véhicules ferroviaires selon l'une quelconque des revendications précédentes, caractérisé en ce que la surface d'enveloppe du bras de pivotement (9) et/ou l'alésage de la bague de roulement intérieure du palier (5) est/sont équipé(s) d'une rainure hélicoïdale (18a, 18b), qui, par l'intermédiaire d'un conduit (19), peut être raccordée à une source de fluide sous pression aux fins de démontage.
